# EUROPÄISCHE PATENTANMELDUNG

(11) **EP 1 577 202 A2**
(43) Veröffentlichungstag der Anmeldung: **21.09.2005**
(21) Anmeldenummer: 05004641.6
(22) Anmeldetag: 03.03.2005
(51) Int. Cl.: B62J 6/00

(54) **Verfahren und Vorrichtung zum Betrieb einer Leuchtdiode mit dem Dynamo eines Zweirades**

(30) Priorität: 19.03.2004 DE 102004013981
(71) Anmelder: Busch & Müller KG, 58540 Meinerzhagen (DE)
(72) Erfinder: Mohr, Manfred, 51647 Gummersbach (DE)
(74) Vertreter: Kahlhöfer, Hermann

(57) **Zusammenfassung**

Die Erfindung betrifft eine Vorrichtung zum Betrieb mindestens einer Leuchtdiode (2), wobei die Stromquelle ein Dynamo (1) eines Zweirades ist und die Strom-/Spannungskennlinie der Leuchtdiode (2) zum sicheren Betrieb eine Strom-/Spannungswandlung erfordert. Zwischen Dynamo (1) und Leuchtdiode (2) sind ein Doppelweggleichrichter (3) und ein Strom-/Spannungswandler (5) geschaltet, und die Leuchtdiode (2) ist in Reihe mit einem Messwiderstand (6) geschaltet. Es ist eine erste Spannungsmesseinrichtung (7) zur Messung der Spannung über dem Messwiderstand (6) vorhanden sowie eine zweite Spannungsmesseinrichtung (8) zur Messung der Spannung am Ausgang des Doppelweggleichrichters (3). Weiter gibt es eine Steuereinheit (9), der die beiden von der ersten (7) und der zweiten (8) Spannungsmesseinrichtung gemessenen Spannungen zugeführt werden und die daraus ein Ansteuersignal für den Strom-/Spannungswandler (5) erzeugt. Die Steuereinheit kann insbesondere so eingestellt werden, dass die Strom-/Spannungscharakteristik am Dynamo (1) in Abhängigkeit von der Geschwindigkeit der Zweirades möglichst nahe an der bei Anschluss einer Glühlampe, insbesondere einer 6-Volt-Halogenlampe für Fahrradscheinwerfer, liegt. Dadurch können bestehende gesetzliche Vorschriften erfüllt werden, wobei gleichzeitig in einem weiten Bereich eine höhere Lichtausbeute erzielt wird, insbesondere bei niedrigen und mittleren Geschwindigkeiten. Zusätzlich kann ein Standlichtkondensator (11) einer Standlichtschaltung (10) mittels einer Ladeschaltung (12) aufgeladen werden, der bei geringer werdender zweiter Spannung mittels einer Entladeschaltung (13) die Leuchtdiode (2) speist. Dadurch kann bei aufgeladenem Standlichtkondensator (11) auch ein unerwünschtes Flackern bei niedriger Geschwindigkeit, insbesondere bei Verwendung eines Nabendynamos, verringert werden.

## Beschreibung

Die vorliegende Erfindung betrifft eine Vorrichtung zum Betrieb mindestens einer Leuchtdiode, insbesondere einer weißen Leuchtdiode im Frontscheinwerfer eines Zweirades, wobei die Stromquelle ein Dynamo, insbesondere ein Nabendynamo, ist.

In den vergangenen Jahren wurden Leuchtdioden immer weiterentwickelt, so dass sie inzwischen immer mehr als Ersatz für herkömmliche Glühlampen oder Halogenlampen in Betracht gezogen werden. Insbesondere ist es auch gelungen, Leuchtdioden zu entwickeln, die weißes oder nahezu weißes Licht abstrahlen. Die Kennlinien von Leuchtdioden, insbesondere betreffend den durch eine Leuchtdiode fließenden Strom in Abhängigkeit von der an der Leuchtdiode anliegenden Spannung, unterscheiden sich allerdings ganz erheblich von den entsprechenden Kennlinien bei Glühlampen. Einerseits braucht eine Leuchtdiode eine Mindestspannung, bevor überhaupt ein Strom fließt, andererseits steigt der Strom dann sehr steil mit zunehmender Spannung an. Bei weißen Leuchtdioden ist die Spannung, ab der ein Strom fließt, die sogenannte Durchbruchspannung, relativ hoch. Typischerweise liegt sie derzeit bei 3 bis 3,5 V. Bei der Verwendung von solchen Leuchtdioden für Serienprodukte ist außerdem zu berücksichtigen, dass aufgrund von Herstellungstoleranzen nicht alle Leuchtdioden einer Produktionsserie exakt die gleiche Kennlinie haben, sondern dass es erhebliche Streuungen sowohl bei der Durchbruchspannung als auch bei dem weiteren Verlauf der Kennlinie gibt. Dies alles erlaubt nicht ohne weiteres die Einführung von Leuchtdioden als Ersatz für herkömmliche Glühlampen, insbesondere nicht bei den Frontscheinwerfem von Fahrrädern. Sehr langfristig wird es möglicherweise Fahrraddynamos und diodenbetriebene Leuchten geben, die in ihren Kennlinien gut aufeinander abgestimmt sind, so dass eine optimale Lichtausbeute bei geringst möglicher Kraftanstrengung des Zweiradfahrers möglich sein wird. Gegenwärtig jedoch sind Millionen Fahrräder mit Dynamos ausgerüstet, die auf Glühlampen abgestimmt sind. Gesetzliche Vorschriften regeln zur Sicherheit der Verkehrsteilnehmer recht genau, welche Spannung ein Fahrraddynamo bei welcher Fahrgeschwindigkeit erzeugen muss und welche Stromstärke in Abhängigkeit von der Spannung erzeugt werden soll. Diese Gegebenheiten müssen berücksichtigt werden, wenn eine Rückleuchte oder ein Frontscheinwerfer eines Fahrrades statt mit einer herkömmlichen Glühlampe mit einer oder mehreren Leuchtdioden ausgerüstet werden soll. Während dies bei Rückleuchten mit Leuchtdioden wegen des geringen Anteils am Gesamtverbrauch noch relativ einfach zu bewerkstelligen ist, ergibt sich für einen Frontscheinwerfer eine recht komplexe Situation.

Um die gesetzlichen Vorschriften einzuhalten, muss ein Frontscheinwerfer schon ab einer Geschwindigkeit von ca. 3,8 km/h anfangen zu leuchten, obwohl bei dieser Geschwindigkeit die von einem Dynamo erzeugte Spannung noch unterhalb der Durchbruchspannung einer typischen weißen Leuchtdiode liegt. Bei höheren Spannungen hingegen würde die vom Dynamo erzeugte Spannung zu einem unzulässig hohen Strom in der Leuchtdiode führen, der diese schnell zerstören würde. Diese Situation macht generell eine Strom-/Spannungswandlung erforderlich, wie sie mit modernen Elektroniken an sich leicht zu erreichen ist. Durch einen sogenannten DC-DC-Wandler (Gleichstrom-Gleichstrom-Wandler), welcher typischerweise mit einer so genannten Pulsweiten-Modulation oder mit einer so genannten Pulsfrequenz-Modulation arbeitet, lässt sich ein Gleichstrom hoher Spannung bei geringem Strom in einen Gleichstrom niedrigerer Spannung bei höherem Strom umwandeln. Was im folgenden anhand der Pulsweiten-Modulation beschrieben wird, lässt sich analog jeweils auch mit Pulsfrequenz-Modulation erreichen. Es stellt sich allerdings bei der Anwendung eines solchen Wandlers heraus, dass dies allein nicht ausreicht, um die vorgegebenen Randbedingungen zu erreichen. Insbesondere würde eine solche Schaltung in Verbindung mit einer oder mehreren weißen Hochleistungsleuchtdioden, wie sie für Frontscheinwerfer eingesetzt werden müssen, entweder in bestimmten Geschwindigkeitsbereichen eine zu geringe Lichtausbeute haben oder aber einen Dynamo so stark belasten, dass beispielsweise eine Rückleuchte nicht mehr ausreichend versorgt werden könnte.

Ein weiteres Problem entsteht bei der Verwendung von sogenannten Nabendynamos, die zunehmend bei Fahrrädern Anwendung finden. Eine Eigenheit dieser Dynamos ist es, dass sie bei niedrigen Geschwindigkeiten einen Wechselstrom sehr niedriger Frequenz abgeben, was schon bei herkömmlichen Leuchten zu einem gewissen Flackern führt. Bei der Verwendung von Leuchtdioden ist dieser Effekt aufgrund der zunächst zu erreichenden Durchbruchspannung bei jeder Halbwelle für das menschliche Auge noch deutlicher wahrnehmbar.

Aufgabe der Erfindung ist es daher, eine Vorrichtung zum Betrieb mindestens einer Leuchtdiode, insbesondere mit einem Strom von mehr als 400 mA, anzugeben, wobei die Stromquelle ein Dynamo eines Zweirades ist und wobei die gesetzlichen bzw. sicherheitstechnischen Anforderungen an Leuchtkraft in Abhängigkeit von der Geschwindigkeit und an die Strom-/Spannungskennlinien am Dynamo eingehalten und nach Möglichkeit sogar besser als bei Glühlampen erfüllt werden. Auch ein entsprechendes Verfahren zum Betrieb mindestens einer Leuchtdiode soll angegeben werden. Ziel ist es dabei, einen Diodenscheinwerfer für ein Fahrrad zu schaffen, der nicht nur bei Neuanlagen, sondern auch zur Nachrüstung eingesetzt werden kann, also ohne Veränderung der anderen Komponenten als Ersatz für einen Glühlampenscheinwerfer, beispielsweise mit einer 6-Volt-Halogenlampe geeignet ist. Ein weiteres Ziel der Erfindung ist es auch, einen solchen Scheinwerfer mit einer Standlichtfunktion auszustatten, insbesondere ohne eine zusätzliche Leuchtdiode einzusetzen, wobei zusätzlich das Flackern bei Versorgung mit Wechselstrom niedriger Frequenz verringert werden soll.

Zur Lösung dieser Aufgabe dient eine Vorrichtung gemäß Anspruch 1 bzw. ein Verfahren gemäß Anspruch 6. Vorteilhafte Weiterbildungen und Ausgestaltungen sind in den jeweils abhängigen Ansprüchen angegeben.

Bei der erfindungsgemäßen Vorrichtung wird zunächst der von einem Dynamo erzeugte Wechselstrom in einem Doppelweggleichrichter gleichgerichtet. Eine Doppelweggleichrichtung ist erforderlich, um den erzeugten Wechselstrom möglichst vollständig in Gleichstrom umzuwandeln. Die am Ausgang des Doppelweggleichrichters zur Verfügung stehende elektrische Leistung liegt bei typischen Fahrradgeschwindigkeiten mit zu hoher Spannung, aber zu geringer verfügbarer Stromstärke für die Speisung einer Hochleistungsleuchtdiode vor, die beispielsweise mit einem Strom von 400 mA oder darüber bei einer Spannung von etwas mehr als 3 V betrieben werden soll. Aus diesem Grunde erfolgt eine Umwandlung in einem Strom-/Spannungswandler, der im Ergebnis wiederum einen Gleichstrom aber bei niedrigerer Spannung und mit höherer verfügbarer Stromstärke erzeugt. Da die Lichtausbeute einer Leuchtdiode, insbesondere einer weißen Hochleistungsleuchtdiode, im wesentlichen von dem in der Leuchtdiode fließenden Strom abhängt und erfindungsgemäß eine möglichst hohe Lichtausbeute unter Einhaltung bestimmter Randbedingungen angestrebt wird, wird der Strom in der Leuchtdiode auf einem vorgegebenen Wert konstant gehalten. Dazu ist die Leuchtdiode mit einem Messwiderstand in Reihe geschaltet. Mit einer ersten Spannungsmesseinrichtung wird die Spannung über dem Messwiderstand gemessen, die direkt proportional dem in der Leuchtdiode fließenden Strom ist. Mit dieser Spannung als Ist-Wert wird eine Steuereinheit versorgt, die wiederum den Stromspannungswandler so regelt, dass der Strom in der Leuchtdiode konstant gehalten wird. Dies allein reicht allerdings nicht aus, um bei geringer Geschwindigkeit eines Zweirades, also bei geringer Leistung des Dynamos, die vorschriftsmäßigen Spannungswerte am Dynamo einzuhalten. Die Leuchtdiode würde mehr Strom verbrauchen als eine Glühlampe, so dass beispielsweise eine parallel angeschlossene Rückleuchte nicht mehr versorgt werden könnte. Aus diesem Grunde ist eine zweite Spannungsmesseinrichtung zur Messung der Spannung am Ausgang des Doppelweggleichrichters vorhanden, deren Ist-Wert ebenfalls der Steuereinheit zugeführt wird. Die Steuereinheit vergleicht die beiden Eingangsspannungen und reduziert gegebenenfalls den Strom durch die Leuchtdiode, wenn die Spannung am Ausgang des Doppelweggleichrichters zu weit abfällt. Diese beschriebene Schaltungsanordnung mit der Messung einer dem Strom durch die Leuchtdiode proportionalen Spannung und der Ausgangsspannung des Doppelweggleichrichters und der weiteren logischen Verarbeitung dieser beiden Signale zur Steuerung eines Strom-/Spannungswandlers bietet prinzipiell die Möglichkeit, unterschiedliche Strom-/Spannungscharakteristiken der gesamten Schaltung einzustellen. So kann diese Schaltung ohne jede prinzipielle Änderung an verschiedene Anwendungsbedingungen oder verschiedene gesetzliche Vorschriften angepasst werden. Sie verhindert sicher die Zerstörung der Leuchtdiode durch zu hohen Strom und einen zu starken Spannungsabfall am Dynamo bei geringer Dynamoleistung, erreicht aber trotzdem in weiten Teilen ihres Arbeitsbereiches eine höhere Lichtausbeute bei geringerer elektrischer Leistung als eine herkömmliche Halogenlampe. Es sei darauf hingewiesen, dass der Messwiderstand zwar erforderlich ist, um ein verwertbares, der Stromstärke in der Leuchtdiode proportionales Signal zu erhalten, dass dieser Messwiderstand jedoch im Rahmen der heute möglichen hohen Messgenauigkeit sehr klein sein kann, so dass die dort in Wärme umgesetzte elektrische Leistung fast vernachlässigbar ist. Auch die Leistungsaufnahme der übrigen Elektronik wird durch die Vorteile einer Leuchtdiode bezüglich Lichtausbeute, Lebensdauer etc. überkompensiert.

In einer bevorzugten Ausgestaltung der Erfindung ist der Stromspannungswandler nach dem Prinzip der Pulsweiten-Modulation (PWM) aufgebaut und hat eine Grundeinstellung, bei der seine Ausgangsspannung einen Wert oberhalb einer Durchbruchspannung der Leuchtdiode erreicht. Bei der Pulsweiten-Modulation wird eine Gleichspannung mit einer hohen Frequenz an und ausgeschaltet, wobei das Verhältnis der Anschaltzeiten zu den Ausschaltzeiten variabel steuerbar ist. In einem anschließeriden aus Induktivität und Kapazität bestehenden Schwingkreis baut sich je nach deren Dimensionierung eine neue Gleichspannung gewünschter Höhe auf. Die ganze Schaltung kann für einen Gleichstrom ähnliches bewirken wie ein Transformator für Wechselstrom, wobei jedoch als Vorteil noch die Regelbarkeit hinzukommt.

Bei einer bevorzugten Ausführungsform der Erfindung wird die Steuereinheit so eingestellt, dass die gesamte Vorrichtung bezogen auf den Dynamo einen ähnlichen Lastverlauf wie eine typische 6-Volt-Halogenlampe für einen Fahrradscheinwerfer aufweist. Das bedeutet, dass bei Ersatz einer herkömmlichen Leuchte durch einen erfindungsgemäßen Scheinwerfer weiterhin alle gesetzlichen Vorschriften eingehalten und eine Rückleuchte parallel ordnungsgemäß mit Strom versorgt werden kann. Eine Anpassung bestehender Beleuchtungssysteme ist bei Ersatz üblicher Frontscheinwerfer durch erfindungsgemäße nicht erforderlich. Auch bei der Neuausrüstung von Zweirädern ist eine Anpassung der anderen bestehenden Systeme nicht erforderlich.

Weiterhin ist bevorzugt dem Ausgang des Doppelweggleichrichters ein Glättungskondensator zur teilweisen Glättung der Gleichspannung parallel geschaltet. Die pulsierende Gleichspannung am Ausgang des Doppelweggleichrichters eignet sich nicht ohne weiteres ungeglättet für die Versorgung der nachfolgenden Komponenten, so dass eine teilweise Glättung von Vorteil ist. Andererseits helfen die Spannungsspitzen, die Durchbruchspannung der Leuchtdiode frühzeitig zu erreichen, so dass auch eine vollständige Glättung nicht sinnvoll ist. Die Kapazität des Glättungskondensators sollte für einen Kompromiss ausgelegt sein.

Bei einer besonders bevorzugten Ausbildung der Erfindung ist noch eine Standlichtschaltung vorhanden, die parallel zu dem Strom-/Spannungswandler angeordnet ist. Diese weist einen Kondensator auf, der bei Überschreiten eines vorgebbaren Schwellwertes der Ausgangsspannung des Doppelweggleichrichters aufgeladen wird und der bei Unterschreiten eines vorgebbaren Schwellwertes der Spannung an der Leuchtdiode diese aus dem Standlichtkondensator speist. Damit kann ohne den Einsatz einer weiteren Standlicht-Leuchtdiode nach einer gewissen Fahrzeit und Aufladung des Standlichtkondensators eine Standlichtfunktion erreicht werden, wie sie aus Sicherheitsgründen wünschenswert ist. Bei kurzen Fahrtunterbrechungen leuchtet die Leuchtdiode mit reduzierter Helligkeit weiter, die zwar nicht mehr zum Ausleuchten der Fahrbahn ausreicht, jedoch das Zweirad gut erkennbar macht.

Die Standlichtschaltung ermöglicht in einer weiteren Ausführungsform der Erfindung sogar noch eine zusätzliche Verbesserung des Fahrlichtes bei niedrigen Geschwindigkeiten des Zweirades. Insbesondere bei der Verwendung eines Nabendynamos, der bei niedriger Fahrgeschwindigkeit typischerweise einen Wechselstrom mit sehr niedriger Frequenz liefert, tritt ein unerwünschtes Flackern der Fahrradbeleuchtung auf. Dieses Flackern ist bei Diodenleuchten für das menschliche Auge besonders auffällig. Daher ist es besonders vorteilhaft, die Standlichtschaltung so an die Leuchtdiode anzukoppeln, dass auch bei sehr kurzzeitigen Abfallen der Spannung an der Leuchtdiode, wie sie bei Verwendung eines Nabendynamos und langsamer Fahrt auftreten, eine Zuschaltung der Standlichtfunktion erfolgt. Das bedeutet, dass die Leuchtdiode nicht mehr ganz abgeschaltet wird für die Zeiten, in denen die Spannung unter die Durchbruchspannung sinkt, sondern dass ihre Lichtausbeute nur bis zur Höhe der Standlichtausbeute abfällt, wodurch das typische Flackern bei aufgeladenem Standlichtkondensator vermieden wird.

Bevorzugt bilden die Leuchtdiode, der Messwiderstand mit der ersten Spannungsmesseinrichtung, die Steuerschaltung und der Strom-/spannungswandler einen ersten Regelkreis, der über einen möglichst großen Arbeitsbereich den durch die Leuchtdiode fließenden Strom konstant hält. Die Sollwerteinstellung dieses Regelkreises kann so erfolgen, dass eine gewünschte Leuchtdiode eine optimale Lichtausbeute erreicht. Es sei darauf hingewiesen, dass die Regelung des Stroms in der Leuchtdiode automatisch auch dazu führt, dass Fertigungstoleranzen verschiedener Leuchtdioden ausgeglichen werden. Unabhängig vom genauen Verlauf der Strom-/Spannungskennlinie einer Leuchtdiode stellt dieser Regelkreis immer den gewünschten Strom ein, ohne dass es bei der Produktion einer Serie von Frontscheinwerfern noch zu Justierungs- oder Kalibrierungsschritten kommen muss.

Bevorzugt bilden die zweite Spannungsmesseinrichtung am Ausgang des Doppelweggleichrichters, die Steuerschaltung und der Strom-/Spannungswandler einen zweiten Regelkreis, der dem eben beschriebenen Regelkreis überlagert ist. Hierdurch wird bewirkt, dass bei Spannungen unter etwa 3 V am Ausgang des Doppelweggleichrichters der Verbrauch der Leuchtdiode begrenzt wird, die Überlagerung der beiden Regelkreise, d. h. die Verarbeitung der Messwerte der ersten und zweiten Spannungsmesseinrichtung kann entweder analog oder digital in einem Mikroprozessor erfolgen. Bei der Verwendung eines Mikroprozessors kann praktisch ein beliebiger Zusammenhang zwischen den beiden Spannungssignalen und dem Ausgang der Steuerschaltung hergestellt werden, so dass sehr präzise ein gewünschter Lastverlauf eingestellt werden kann. Die Möglichkeit, genau den Lastverlauf einer Glühlampe nachzubilden, ist zwar bevorzugt, aber nicht die einzige Möglichkeit der Einstellung. Grundsätzlich bietet die Schaltung auch die Möglichkeit, den Lastverlauf an neu konzipierte Dynamos und/oder andersartige Rückleuchten bzw. andere Verbraucher am Zweirad anzupassen.

Insbesondere im erfindungsgemäßen Verfahren ist es bevorzugt möglich, dass die erste Spannung über dem Messwiderstand zur Steuerung des Strom/Spannungswandlers zur Konstanthaltung des Stromes in der Leuchtdiode genutzt wird. Bevorzugt ist auch, dass insbesondere im erfindungsgemäßen Verfahren die zweite Spannung zur Begrenzung des Stromes in der Leuchtdiode genutzt wird, wenn die zweite Spannung in einen Bereich unter etwa 3 V abfällt. Bevorzugt ist weiterhin insbesondere bei dem erfindungsgemäßen Verfahren, dass die Leuchtdiode im Bereich einer Dynamospannung oberhalb von etwa 3 V Wechselstrom mit maximal möglicher Lichtausbeute betrieben wird, indem der Strom in der Leuchtdiode auf einem maximal dauerhaft verträglichen Wert konstant gehalten wird. Bevorzugt ist weiterhin, dass der Dynamo unter Last eine Wechselspannung bis etwa 7,5 V erzeugt und einen maximalen Strom von etwa 500 mA.

Typischerweise arbeiten handelsübliche Strom-/Spannungswandler mit einer Arbeitsfrequenz von etwa 50 kHz, was für die vorliegende Erfindung hoch genug ist. Allerdings wird in diesem Bauteil eine Induktivität benötigt, deren Baugröße mit zunehmender Arbeitsfrequenz geringer wird. Da die ganze Schaltung in einem kompakten Frontscheinwerfer untergebracht werden soll, kann es vorteilhaft sein, eine höhere Arbeitsfrequenz, beispielsweise 300 kHz oder sogar bis zu 2MHz zu benutzen.

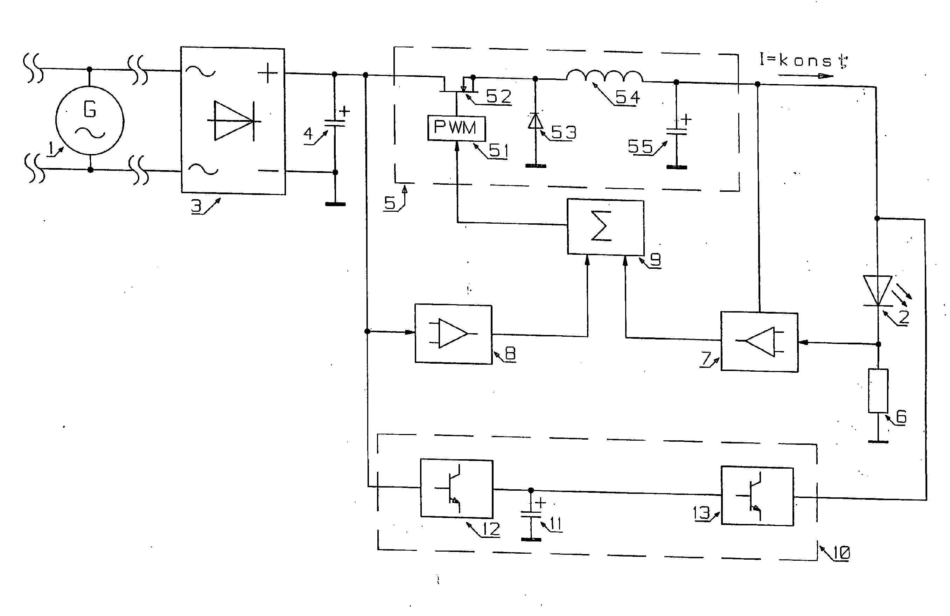

Ein Ausführungsbeispiel der Erfindung und weitere Einzelheiten der erfindungsgemäßen Vorrichtung und des erfindungsgemäßen Verfahrens werden im folgenden anhand der Zeichnung näher erläutert. Die einzige Figur zeigt ein Blockschaltbild der erfindungsgemäßen Vorrichtung, wobei alle Bauteile mit Ausnahme des Dynamos vorzugsweise so klein ausgefährt sind, dass sie in den Frontscheinwerfer eines Zweirades integriert werden können.

Das Blockschaltbild zeigt einen Generator 1, an den parallel ein erfindungsgemäßer Frontscheinwerfer und weitere Verbraucher, insbesondere eine Rückleuchte, angeschlossen sein können. Bei der erfindungsgemäßen Schaltung gelangt der vom Generator 1 ' erzeugte Wechselstrom zunächst zu einem Doppelweggleichrichter 3, der möglichst verlustfrei den Wechselstrom gleichrichtet. Dem Ausgang des Doppelweggleichrichters 3 parallel geschaltet ist ein Glättungskondensator 4, der den pulsierenden Gleichstrom teilweise glättet. Der typischerweise mit zu hoher Spannung und zu geringer Stromstärke verfügbare Gleichstrom wird in einem Strom-/Spannungswandler mit Hilfe von Pulsweiten-Modulation umgewandelt, so dass er am Ausgang eine für den Betrieb einer Hochleistungsleuchtdiode, insbesondere einer weißen Leuchtdiode, zur Verfügung steht. Falls eine Leuchtdiode zur Erzeugung der gewünschten Helligkeit nicht ausreicht, können hier zwei oder mehr parallel geschaltete Leuchtdioden eingesetzt werden. Jedenfalls sollten sich diese Leuchtdioden im Wirkzentrum eines Reflektors befinden, um die vorgeschriebene Lichtverteilung eines Frontscheinwerfers, beispielsweise für Fahrräder, zu erreichen. Die Leuchtdiode 2 ist-über einen in Reihe geschalteten Messwiderstand 6 mit Masse verbunden. Der Messwiderstand 6 ist sehr klein, beispielsweise 0,33 Ω oder 0,1 Ω, reicht jedoch aus, um über ihm einen Spannungsabfall messen zu können, der dem Strom durch die Leuchtdiode 2 direkt proportional ist. Die in dem Messwiderstand 6 in Wärme umgewandelte elektrische Energie ist sehr gering. Mit einer ersten Spannungsmesseinrichtung 7, typischerweise unter Verwendung eines Operationsverstärkers, wird die Spannung über dem Messwiderstand 6 gemessen, so dass der Ausgangswert der ersten Spannungsmesseinrichtung 7 dem Strom I durch die Leuchtdiode 2 direkt proportional ist. Jede andere Möglichkeit zur Erzeugung eines diesem Strom I proportionalen Signals ist in gleicher Weise für die weiteren Schritte geeignet. Der dem Strom I proportionale Messwert wird einer Steuereinheit 9 zugeführt, die den Strom-/Spannungswandler 5 so regelt, dass der Strom I konstant auf einem gewünschten Wert bleibt, beispielsweise auf einem Wert von mehr als 400 mA, insbesondere zwischen 400 und 800 mA, vorzugsweise größer als 500 mA, insbesondere zwischen 500 und 700 mA. Dies entspricht typischerweise einer Spannung am Ausgang des Stromspannungswandlers 5 von 3,0 bis 3,5 V. Bei dieser Art der Regelung spielt die genaue Kennlinie der Leuchtdiode 2 keine Rolle, da durch die Einstellung des gewünschten Stromes, der wiederum die gewünschte Lichtausbeute bewirkt, automatisch ein passender Punkt auf der Kennlinie der Leuchtdiode 2 gefunden wird.

Der Stromspannungswandler 5 enthält typischerweise einen Pulsweiten-Modulator 51, einen Leistungsschalter 52 und einen aus Induktivität 54 und Kapazität 55 bestehenden Schwingkreis sowie eine Diode 53. Die Pulsweite kann digital oder analog eingestellt werden, so dass der Strom-/Spannungswandler für Gleichstrom eine ähnliche Wirkung erzielen kann wie ein geregelter Transformator für Wechselstrom.

Die reine Konstanthaltung des Stromes I durch die Leuchtdiode 2 führt zu guten Ergebnissen bei mittlerer und hoher Leistung des Generators, das heißt bei mittleren und höheren Geschwindigkeiten eines Fahrrades, kann jedoch im niedrigen Leistungsbereich, beispielsweise bei Geschwindigkeiten von 3 bis 7 km/h zu einer unerwünscht hohen Belastung des Generators 1 führen. In diesem Falle würde beispielsweise eine Rückleuchte nicht vorschriftsmäßig versorgt. Aus diesem Grunde ist dem ersten Regelkreis ein zweiter Regelkreis überlagert, der aus einer zweiten Spannungsmesseinrichtung 8, der Steuereinheit 9 und dem Pulsweiten-Modulator 5 gebildet wird. Die zweite Spannungsmesseinrichtung 8 misst die Ausgangsspannung am Doppelweggleichrichter 3 und führt diesen Messwert, vorzugsweise auch nach Verarbeitung in einem Operationsverstärker, der Steuerschaltung 9 zu. Dort wird analog oder digital eine Auswertung der Messwerte der ersten 7 und der zweiten 8 Spannungsmesseinrichtung durchgeführt und je nach dem Ergebnis entweder der Strom I durch die Leuchtdiode 2 konstant gehalten oder bei geringen Ausgangsspannungen des Doppelweggleichrichters 3 die Leistungsaufnahme der Leuchtdiode 2 reduziert. Durch geeignete Einstellung bzw. Programmierung der Steuerschaltung 9 lässt sich so fast jeder Lastverlauf für die gesamte Vorrichtung einstellen, insbesondere auch ein sehr ähnlicher Lastverlauf zu einer typischen 6-Volt-Halogenlampe für einen Fahrradscheinwerfer.

Besonders vorteilhaft kann die bisher beschriebene Schaltung noch durch eine Standlichtschaltung 10 ergänzt werden, die dem Strom-/Spannungswandler 5 parallel geschaltet ist. Diese Standlichtschaltung 10 weist einen Standlichtkondensator 11 auf, der durch eine Ladeschaltung 12 aufgeladen wird, wenn die Ausgangsspannung am Doppelweggleichrichter 3 einen vorgegebenen Schwellwert überschreitet. In diesem Falle wird ein kleiner Teil der verfügbaren elektrischen Leistung für die Aufladung des Standlichtkondensators 11 abgezweigt, ohne dass die Lichtausbeute der Leuchtdiode 2 darunter merkbar leidet. Fällt die an der Leuchtdiode 2 verfügbare Spannung unter einen vorgegebenen Schwellwert ab, so bewirkt eine Entladeschaltung 13 die Versorgung der Leuchtdiode 2 aus dem Standlichtkondensator 11. Dabei kann ein solcher Strom durch die Leuchtdiode 2 eingestellt werden, dass eine gewünschte Lichtausbeute für Standlicht erreicht wird. Je nach Ladezustand des Sfandlichtkondensators 11 und nach dessen Kapazität kann so ein Standlicht für einige Minuten sichergestellt werden. Dabei ist es von großem Vorteil, dass dieses Standlicht nicht von einer gesonderten Leuchtdiode außerhalb des Wirkzentrums des Reflektors, sondern von derselben Leuchtdiode 2 wie das Fahrlicht abgegeben wird.

Ein weiterer besonderer Vorteil einer Standlichtschaltung 10 besteht darin, dass diese auch zum deutlichen Verringern des Flackerns der Leuchtdiode 2 benutzt werden kann, welches typischerweise bei der Verwendung eines Nabendynamos und bei niedrigen Geschwindigkeiten auftritt. Nabendynamos liefern bei niedrigen Geschwindigkeiten einen Wechselstrom geringer Frequenz, was zu einem ständigen An- und Ausschalten der Leuchtdiode 2 führen würde. Bei einer empfindlich geschalteten Entladeschaltung 13 kann diese auf einen Spannungsabfall an der Leuchtdiode 2 so schnell reagieren, dass die Standlichtfunktion nicht erst bei Stillstand zugeschaltet wird, sondern jedes Mal, wenn sich die Spannung an der Leuchtdiode 2 der Durchbruchspannung von oben annähert. Die Leuchtdiode 2 leuchtet dann immer mindestens mit der Lichtausbeute der Standlichtfunktion, wodurch das sonst auftretende Flackern optisch kaum noch wahrnehmbar wird.

Die vorliegende Erfindung eignet sich insbesondere für Frontscheinwerfer von Fahrrädern und kann ohne Anpassung der übrigen Komponenten bisherige, mit Glühlampen betriebene Frontscheinwerfer ersetzen. Die gesetzlichen Vorschriften bezüglich des Lastverlaufs können eingehalten werden, wobei im typischen Nutzungsbereich von 3 bis 20 km/h größtenteils eine bessere Lichtausbeute als bei herkömmlichen Scheinwerfern erreicht werden kann. Gleichzeitig haben Leuchtdioden eine so lange Lebensdauer, dass solche Scheinwerfer gekapselt werden können und keine Möglichkeit zum Auswechseln des Leuchtmittels benötigen.

### Bezugszeichenliste

- 1: Dynamo
- 2: (weiße) Leuchtdiode
- 3: Doppelweggleichrichter
- 4: Glättungskondensator
- 5: Strom-/Spannungswandler
- 6: Messwiderstand
- 7: erste Spannungsmesseinrichtung
- 8: zweite Spannungsmesseinrichtung
- 9: Steuereinheit
- 10: Standlichtschaltung
- 11: Standlichtkondensator
- 12: Ladeschaltung
- 13: Entladeschaltung

- 51: Pulsweiten-Modulator
- 52: Leistungsschalter
- 53: Diode
- 54: Induktivität
- 55: Kapazität

## Patentansprüche

1. Vorrichtung zum Betrieb mindestens einer Leuchtdiode (2), wobei die Stromquelle ein Dynamo (1) eines Zweirades ist und die Strom-/Spannungskennlinie der Leuchtdiode (2) zum sicheren Betrieb eine Strom-/Spannungswandlung erfordert, **gekennzeichnet durch** folgende Merkmale:
a. Zwischen Dynamo (1) und Leuchtdiode (2) sind ein Doppelweggleichrichter (3) und ein Strom-/Spannungswandler (5) geschaltet;
b. Die Leuchtdiode (2) ist in Reihe mit einem Messwiderstand (6) geschaltet;
c. Es ist eine erste Spannungsmesseinrichtung (7) zur Messung der Spannung über dem Messwiderstand (6) vorhanden;
d. Es ist eine zweite Spannungsmesseinrichtung (8) zur Messung der Spannung am Ausgang des Doppelweggleichrichters (3) vorhanden.
e. Es ist eine Steuereinheit (9) vorhanden, der die beiden von der ersten (7) und der zweiten (8) Spannungsmesseinrichtung gemessenen Spannungen zugeführt werden und die daraus ein Ansteuersignal für den Strom/Spannungswandler (5) erzeugt.

2. Vorrichtung nach Anspruch 1, **dadurch gekennzeichnet, dass** der Strom/Spannungswandler (5) nach dem Prinzip der Puls-Weiten-Modulation (PWM) oder der Pulsfrequenz-Modulation aufgebaut ist und eine Grundeinstellung hat, bei der seine Ausgangsspannung einen Wert oberhalb einer Durchbruchspannung der Leuchtdiode (2) erreicht.

3. Vorrichtung nach Anspruch 1 oder 2, **dadurch gekennzeichnet, dass** die Steuereinheit (9) so eingestellt ist, dass die gesamte Vorrichtung einen ähnlichen Lastverlauf wie eine typische 6-Volt-Halogenlampe für einen Fahrradscheinwerfer aufweist.

4. Vorrichtung nach einem der vorhergehenden Ansprüche, **dadurch gekennzeichnet, dass** parallel zu dem Strom-/Spannungswandler (5) eine Standlichtschaltung (10) angeordnet ist, die bei Überschreiten eines vorgebbaren Schwellwertes der Ausgangsspannung des Doppelweggleichrichters (3) einen Standlichtkondensator (11) auflädt und bei Unterschreiten eines vorgebbaren Schwellwertes der Spannung an der Leuchtdiode (2) diese aus dem Standlichtkondensator (11) speist.

5. Vorrichtung nach Anspruch 4, **dadurch gekennzeichnet, dass** die Standlichtschaltung (10) so an die Leuchtdiode (2) angekoppelt ist, dass auch bei sehr kurzzeitigen Abfällen der Spannung an der Leuchtdiode (2), wie sie beispielsweise bei einem Zweirad "mit Nabendynamo bei langsamer Fahrt auftreten, eine Zuschaltung der Standlichtfunktion erfolgt.

6. Verfahren zum Betrieb mindestens einer Leuchtdiode (2), insbesondere mit einem Strom (I) von mehr als 400 mA, wobei die Stromquelle ein Dynamo (1) eines Zweirades ist, wobei die Strom-/Spannungskennlinie der Leuchtdiode (2) zum sicheren Betrieb eine Strom-/Spannungswandlung (5) erfordert, **gekennzeichnet durch** folgende Merkmale:
a. Zwischen Dynamo (1) und Leuchtdiode (2) wird eine Doppelweggleichrichtung (3) und eine Strom-/Spannungswandlung (5) durchgeführt;
b. Die Leuchtdiode (2) wird in Reihe mit einem Messwiderstand (6) geschaltet;
c. Eine erste Spannung über dem Messwiderstand (6) wird gemessen;
d. Eine zweite Spannung am Ausgang des Doppelweggleichrichters (3) wird gemessen;
e. Die erste und die zweite Spannung werden einer Steuereinheit (9) zugeführt, die daraus ein Ansteuersignal für den Strom-/Spannungswandler (5) erzeugt.

7. Verfahren nach Anspruch 6, **dadurch gekennzeichnet, dass** die Leuchtdiode (2) mit einer Spannung von etwa 3 bis 3,5 V betrieben wird.

8. Verfahren nach einem der Ansprüche 6 bis 7, **dadurch gekennzeichnet, dass** die Steuereinheit so eingestellt wird, dass die Strom-/Spannungscharakteristik am Dynamo (1) in Abhängigkeit von der Geschwindigkeit der Zweirades möglichst nahe an der bei Anschluss einer Glühlampe, insbesondere einer 6-Volt-Halogenlampe für Fahrradscheinwerfer, liegt.

9. Verfahren nach einem der Ansprüche 6 bis 8, **dadurch gekennzeichnet, dass** ab einem vorgegebenen Mindestwert der zweiten Spannung am Ausgang des Doppelweggleichrichters (3), bei dem die Leuchtdiode (2) schon leuchtet, zusätzlich mindestens ein Standlichtkondensator (11) einer Standlichtschaltung (10) mittels einer Ladeschaltung (12) aufgeladen wird, der bei geringer werdender zweiter Spannung mittels einer Entladeschaltung (13) die Leuchtdiode (2) speist.

10. Verfahren nach Anspruch 9, **dadurch gekennzeichnet, dass** die Standlichtschaltung (10) so geschaltet wird, dass sie sich auch schon bei periodischen Spannungsabfällen in der Größenordnung von 1 bis 15 Hz an der Leuchtdiode (2) zuschaltet.
